# EUROPÄISCHE PATENTSCHRIFT

(11) **EP 3 094 877 B1**
(45) Veröffentlichungstag und Bekanntmachung des Hinweises auf die Patenterteilung: **17.01.2018**
(21) Anmeldenummer: 14815571.6
(22) Anmeldetag: 27.11.2014
(51) Int. Cl.: F16C 41/00, F16C 17/24, F16C 33/10, F16C 33/12, F16C 33/26, F16C 17/10

(54) **DREHVERBINDUNG MIT EINEM SELBSTHEMMENDEN LAGER**
ROTATIONAL CONNECTION BY MEANS OF A SELF-LOCKING BEARING
COURONNE D'ORIENTATION À PALIER AUTOBLOQUANT

(30) Priorität: 16.01.2014 DE 102014200725
(43) Veröffentlichungstag der Anmeldung: 23.11.2016
(73) Patentinhaber: Schaeffler Technologies AG & Co. KG, 91074 Herzogenaurach (DE)
(72) Erfinder: NUISSL, Christian, 90763 Fürth (DE); SCHIEFHAUER, Christian, 97616 Bad Neustadt a. d. Saale (DE); FORSTNER, Christian, 97422 Schweinfurt (DE); GIRR, Harry, 97464 Niederwerrn (DE)
(86) Internationale Anmeldenummer: PCT/DE2014/200660
(87) Internationale Veröffentlichungsnummer: WO 2015/106747

(56) Entgegenhaltungen:
- EP-A2- 1 467 095
- EP-A2- 1 764 522
- DE-A1- 2 648 118
- DE-A1-102006 029 679
- DE-U1- 20 111 648

## Beschreibung

### Gebiet der Erfindung

Die Erfindung betrifft eine Drehverbindung mit einem selbsthemmenden Lager, insbesondere zur Lagerung eines Deckenstativs, mit einem Innenring und wenigstens einem Außenring.

### Hintergrund der Erfindung

Drehverbindungen mit einem selbsthemmenden Lager werden bei unterschiedlichen Anwendungen benötigt. Beispiele dafür sind Deckenstative, beispielsweise für ein medizinisches Gerät, Lackierroboter, Fahrradschwingen, Hauptlagerungen von Heliostaten und anderen Anwendungen.

Bei allen Anwendungen wird ein über die Lebensdauer der Drehverbindung und des selbsthemmenden Lagers weitestgehend konstantes Verstell- oder Betätigungsmoment benötigt. Herkömmliche Drehverbindungen mit einem selbsthemmenden Lager umfassen zumeist ein Wälzlager sowie ein separates Brems- oder Reibelement, um die gewünschte Selbsthemmung zu erzeugen. Drehverbindungen mit einem selbsthemmenden Lager, das auf einer Wälzlagerung basiert, können sowohl wartungsarm als auch wartungspflichtig ausgeführt sein. Im erstgenannten Fall erfolgt eine einmalige Befettung, bei der zweiten Variante ist eine regelmäßige Nachschmierung erforderlich. Allerdings besteht bei der Verwendung eines Schmierstoffs wie Fett oder Öl in dem Wälzlager immer die Gefahr einer Leckage und damit eines Austritts des Schmierstoffs aus dem Inneren des Lagers. Problematisch sind daher reinheitskritische Anwendungen, beispielsweise ein in einem Operationsraum montiertes Deckenstativ eines medizinischen Geräts. Auch bei einer Verwendung in einem Reinraum müssen besondere Maßnahmen ergriffen werden, um Leckage und/oder ein Ausdampfen des Schmierstoffs zu verhindern.
Aus der DE 25 38 006 ist auch eine Drehverbindung, die als Gleitlager ausgebildet ist, bekannt.

### Zusammenfassung der Erfindung

Der Erfindung liegt die Aufgabe zugrunde, eine Drehverbindung mit einem selbsthemmenden Lager anzugeben, die auch für die Anwendung in reinheitskritischen Bereichen geeignet ist.

Zur Lösung dieser Aufgabe ist bei einer Drehverbindung der eingangs genannten Art erfindungsgemäß vorgesehen, dass das Lager als Gleitlager ausgebildet ist und einen radial zwischen dem wenigstens einen Innenring und dem wenigstens einen Außenring angeordneten Zwischenring aufweist, wobei jeder Ring wenigstens eine von außen unzugängliche ringförmige Gleitfläche aufweist und wobei eine erste Gleitpaarung zwischen dem wenigsten einen Innenring und dem Außenring und eine zweite Gleitpaarung zwischen dem Zwischenring und dem wenigstens einen Außenring vorgesehen ist, wobei eine Gleitfläche einer Gleitpaarung mit einem Gleitlack beschichtet ist.

Anders als bei herkömmlichen Drehverbindungen mit einem selbsthemmenden Lager wird bei der erfindungsgemäßen Drehverbindung auf ein Wälzlager verzichtet, stattdessen ist eine mit einem Gleitlack beschichtete Gleitfläche vorgesehen, die mit einer anderen Gleitfläche eine Gleitpaarung bildet. Es handelt sich somit um eine trocken laufende Gleitpaarung, die weder Fett noch Öl benötigt, da die beiden ringförmigen Gleitflächen direkt aufeinander laufen.

Bei der erfindungsgemäßen Drehverbindung ist es vorgesehen, dass die den Gleitlack aufweisende Gleitfläche eine Anker- oder Notlaufbeschichtung aufweist, auf der der Gleitlack aufgebracht ist. Diese Anker- oder Notlaufbeschichtung wird während der Herstellung zuerst aufgebracht, anschließend wird der Gleitlack auf die Anker- oder Notlaufbeschichtung aufgebracht. Während des normalen Betriebs der Drehverbindung bildet der Gleitlack eine Gleitfläche, erst wenn dieser verschlissen ist, tritt die Anker- oder Notlaufbeschichtung in Aktion. Die Anker- oder Notlaufbeschichtung kann beispielsweise Manganphosphat und/oder Molybdänsulfid umfassen bzw. daraus bestehen.

Vorzugsweise weisen alle erwähnten Varianten die Gemeinsamkeit auf, dass diejenige Gleitfläche der Gleitpaarung, die keinen Gleitlack aufweist, in der Regel unbeschichtet ist. Vorzugsweise ist die unbeschichtete Gleitfläche eine Metalloberfläche, ähnlich wie eine Lauffläche eines Lagerrings.

Es liegt auch im Rahmen der Erfindung, dass eine Gleitpaarung als Gleitlagerscheibenpaarung ausgebildet ist, wobei eine erste Gleitlagerscheibe an dem wenigstens einen Innenring und eine zweite Gleitlagerscheibe an dem Außenring und oder eine erste Gleitlagerscheibe an dem Zwischenring und eine zweite Gleitlagerscheibe an dem wenigstens einen Außenring angeordnet ist. Dementsprechend weisen die Ringe entsprechende Gleitlagerscheiben auf, die eine lagerfähige Oberflächengüte besitzen. Zwei Gleitlagerscheiben bilden dabei jeweils eine Gleitpaarung, eine der Gleitlagerscheiben ist mit dem Gleitlack beschichtet, die andere Gleitlagerscheibe ist hingegen in der Regel unbeschichtet.

In weiterer Ausgestaltung der Erfindung kann es vorgesehen sein, dass der Zwischenring als mit dem Innenring verschraubbares oder verschraubtes Stellmittel zum Einstellen des Anpressdrucks und/oder der Selbsthemmung des Gleitlagers ausgebildet ist. Das Einstellen kann durch mehr oder weniger starkes Einschrauben des Zwischenrings in den Innenring erfolgen. Anschließend kann das Stellmittel vorzugsweise mittels Gewindestiften gesichert werden, wodurch ein Lösen der Schraubverbindung verhindert wird.

Mittels des Stellmittels kann ein gewünschter Anpressdruck bzw. eine Anpresskraft einer Gleitpaarung erzeugt und/oder eingestellt werden. Durch das axiale oder radiale Stellmittel kann die Relativposition der beiden Gleitflächen einer Gleitpaarung zumindest minimal justiert werden, um die gewünschte Selbsthemmung einzustellen.

Alternativ oder zusätzlich kann es bei der erfindungsgemäßen Drehverbindung vorgesehen sein, dass einer Gleitpaarung zum Erzeugen eines festgelegten Anpressdrucks wenigstens ein vorgespanntes Federelement zugeordnet ist. Das wenigstens eine Federelement presst die beiden Gleitflächen der Gleitpaarung mit einer festgelegten Kraft gegeneinander, so dass bei einer Drehung der beiden Gleitflächen gegeneinander Reibung auftritt. Diese Reibung ist gewünscht und erzeugt die Selbsthemmung, wodurch eine weitere Drehung der Gleitflächen und der damit verbundenen Komponenten verhindert wird.

Es sind auch Ausführungen denkbar, bei denen das Federelement eine oder mehrere Tellerfedern oder eine oder mehrere Wellringfedern umfasst, die vorzugsweise über den Umfang der Gleitfläche verteilt angeordnet sind.

### Kurze Beschreibung der Zeichnung

Ein Ausführungsbeispiel der Erfindung ist in der Zeichnung dargestellt und wird im Folgenden näher beschrieben. Es zeigen:
- Figur 1: eine erfindungsgemäße Drehverbindung mit einem selbsthemmenden Lager in einer geschnittenen Seitenansicht;
- Figur 2: eine Draufsicht des in Figur 1 gezeigten Lagers; und

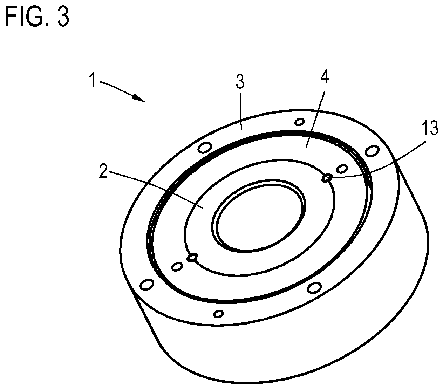

- Figur 3: eine perspektivische Ansicht des in Figur 1 gezeigten Lagers.

### Ausführliche Beschreibung der Zeichnung

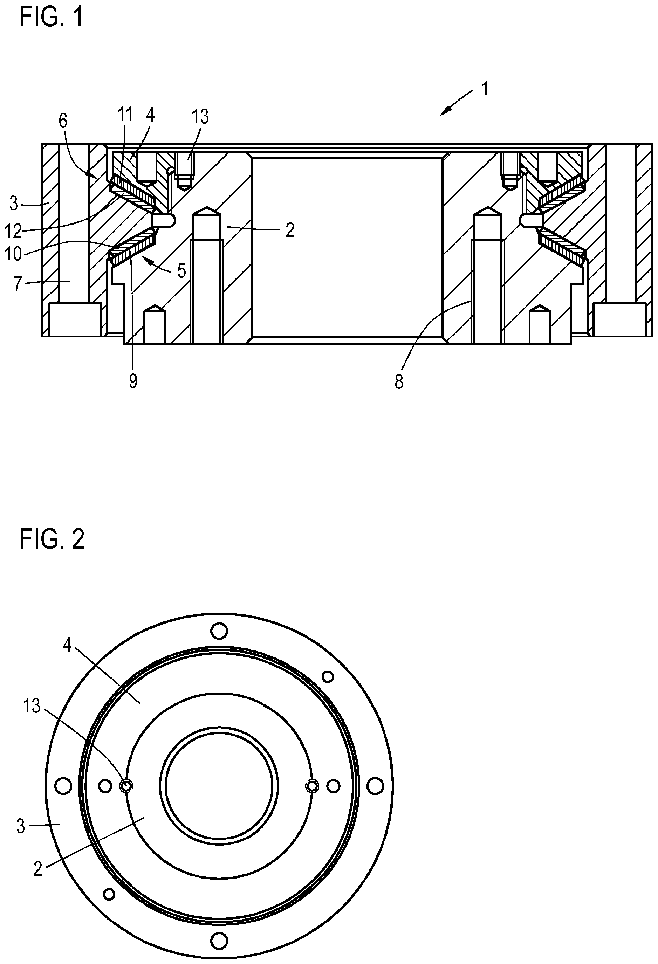

Das in Figur 1 in einer geschnittenen Seitenansicht gezeigte Lager 1 ist Bestandteil einer Drehverbindung, mit der ein Deckenstativ eines medizinischen Geräts gelagert ist.

Die Drehverbindung mit dem selbsthemmenden Lager 1 umfasst einen Innenring 2, einen Außenring 3 und einen radial zwischen Innenring 2 und Außenring 3 angeordneten Zwischenring 4.

Eine erste Gleitpaarung 5 ist zwischen dem Innenring 2 und dem Außenring 3 gebildet, eine zweite Gleitpaarung 6 ist zwischen dem Zwischenring 4 und dem Außenring 3 gebildet. Das Lager 1 ist somit als Gleitlager ausgebildet, jede Gleitpaarung 5, 6 umfasst eine mit einem Gleitlack beschichtete Gleitfläche.

Der Außenring 3 weist eine Durchgangsbohrung 7 auf, um den Außenring 3 mit einem anderen Bauteil, beispielsweise einem Tragarm eines Deckenstativs eines medizinischen Geräts zu verbinden. In ähnlicher Weise weist der Innenring 2 ein Sacklochgewinde 8 auf, um den Innenring 2 mit einer anderen Komponente des Deckenstativs zu verbinden. Mittels des Lagers 1 werden zwei Komponenten eines Deckenstativs, beispielsweise zwei Tragarme, zueinander drehbar gelagert.

In dem in Figur 1 gezeigten Ausführungsbeispiel erkennt man, dass die beiden Gleitpaarungen 5, 6 als Gleitlagerscheibenpaarungen ausgebildet sind. Die erste Gleitpaarung 5 umfasst eine erste Gleitlagerscheibe 9 an dem Innenring 2 und eine zweite Gleitlagerscheibe 10 an dem Außenring 3 sowie eine erste Gleitlagerscheibe 11 an dem Zwischenring 4 und eine zweite Gleitlagerscheibe 12 an dem Außenring 3.

Bei beiden Gleitpaarungen 5, 6 weist jeweils die erste Gleitlagerscheibe 9, 11 eine mit einem Gleitlack beschichtete Gleitfläche auf. Die Gleitfläche umfasst eine Anker- oder Notlaufbeschichtung aus Manganphosphat und/oder Molybdänsulfid, auf die der Gleitlack aufgebracht ist. Diejenige Gleitfläche der Gleitpaarungen 5, 6, die keinen Gleitlack aufweist, in dem dargestellten Ausführungsbeispiel somit die zweiten Gleitlagerscheiben 10, 12, sind unbeschichtet.

Der in Figur 1 gezeigte Zwischenring 4 ist als Stellring ausgebildet. Die axiale Einstellung des Anpressdrucks der beiden Gleitpaarungen erfolgt durch Verschrauben des Zwischenrings 4 mit dem Innenring 2, dazu ist an der Außenseite des Innenrings 2 ein Außengewinde und an der Innenseite des Zwischenrings 4 ein Innengewinde angeordnet. Nach dem Einstellen eines festgelegten Anpressdrucks werden zwei Gewindestifte 13 in entsprechende Gewinde des Innenrings 2 geschraubt, die als Verdrehsicherung dienen. Die beiden Gewinde des Innenrings 2 liegen einander gegenüber, die eingeschraubten Gewindestifte 13 verhindern ein Lösen der Schraubverbindung zwischen Innenring 2 und Zwischenring 4.

Bei anderen Ausführungen kann einer Gleitpaarung auch ein vorgespanntes Federelement, das insbesondere eine oder mehrere Tellerfedern oder eine oder mehrere Wellringfedern umfasst, zum Erzeugen eines festgelegten Anpressdrucks zugeordnet sein.

Das Lager 1 weist den Vorteil auf, dass es wartungsfrei ist, da die mit dem Gleitlack beschichteten Gleitflächen der Gleitpaarungen 5, 6 während der gesamten Lebensdauer keine Wartung durch Schmieren oder eine Ölbefüllung erfordern. Da kein Schmierstoff benötigt wird, kann das Lager 1 auch in solchen Umgebungen eingesetzt werden, bei denen ein Ausritt eines Schmierstoffs aus dem Lager unbedingt verhindert werden muss. Ein weiterer Vorteil des Lagers 1 ist darin zu sehen, dass aufgrund des Wegfalls der Wälzkörper und eines Wälzkörperkäfigs die Bauhöhe reduziert ist, ohne dass dadurch die Tragfähigkeit reduziert wird. Die Gleitschicht der Gleitpaarung besteht aus einem wartungsfreien trocken laufenden Gleitlack, der auf eine Gleitfläche einer spanlos hergestellten Gleitlagerscheibe bzw. Schräglagerscheibe aufgebracht ist. Diese Gleitlagerscheibe bildet mit einer weiteren, gegenüberliegenden Gleitlagerscheibe die Gleitpaarung, alternativ kann die Gleitlagerscheibe auch direkt auf einer Gegenkontur, beispielsweise einem Außenring, laufen.

Die bei dem Lager 1 vorgesehene Gleitpaarung 5, 6 erzeugt ein definiertes Betätigungs- und Verstellmoment und somit eine Selbsthemmkraft direkt im Lager 1, ohne dass zusätzliche oder separate Brems- oder Reibelemente erforderlich wären. Darüber hinaus ist eine Anpassung oder Nachstellung der Selbsthemmkraft mittels des Stellmittels möglich.

### Bezugszahlenliste

- 1: Lager
- 2: Innenring
- 3: Außenring
- 4: Zwischenring
- 5: Gleitpaarung
- 6: Gleitpaarung
- 7: Durchgangsbohrung
- 8: Sacklochgewinde
- 9: Gleitlagerscheibe
- 10: Gleitlagerscheibe
- 11: Gleitlagerscheibe
- 12: Gleitlagerscheibe
- 13: Gewindestift

## Patentansprüche

1. Drehverbindung mit einem selbsthemmenden Lager (1), insbesondere zur Lagerung eines Deckenstativs, umfassend wenigstens einen Innenring (2) und wenigstens einem Außenring (3), wobei das Lager (1) als Gleitlager ausgebildet ist und einen radial zwischen dem wenigstens einen Innenring (2) und dem wenigstens einen Außenring (3) angeordneten Zwischenring (4) aufweist, wobei jeder Ring (2, 3, 4) wenigstens eine von außen unzugängliche ringförmige Gleitfläche aufweist und wobei eine erste Gleitpaarung (5) zwischen dem wenigstens einen Innenring (2) und dem wenigstens einen Außenring (3) und eine zweite Gleitpaarung (6) zwischen dem Zwischenring (4) und dem wenigstens einen Außenring (3) vorgesehen ist, **dadurch gekennzeichnet, dass** eine Gleitpaarung (5, 6) als Gleitlagerscheibenpaarung ausgebildet ist, bei welcher eine erste Gleitlagerscheibe (9) an dem wenigstens einen Innenring (2) und eine zweite Gleitlagerscheibe (10) an dem wenigstens einen Außenring (3) und/oder eine erste Gleitlagerscheibe (11) an dem Zwischenring (4) und eine zweite Gleitlagerscheibe (12) an dem wenigstens einen Außenring (3) angeordnet ist, wobei eine Gleitfläche einer Gleitpaarung (5, 6) mit einem Gleitlack beschichtet ist.

2. Drehverbindung nach Anspruch 1, **dadurch gekennzeichnet, dass** die den Gleitlack aufweisende Gleitfläche eine Anker- oder Notlaufbeschichtung aufweist, auf die der Gleitlack aufgebracht ist.

3. Drehverbindung nach Anspruch 2, **dadurch gekennzeichnet, dass** die Anker- oder Notlaufbeschichtung aus Manganphosphat besteht oder Manganphosphat aufweist.

4. Drehverbindung nach einem der vorangehenden Ansprüche, **dadurch gekennzeichnet, dass** diejenige Gleitfläche der Gleitpaarung (5, 6), die keinen Gleitlack aufweist, unbeschichtet ist.

5. Drehverbindung nach einem der vorangehenden Ansprüche, **dadurch gekennzeichnet, dass** der Zwischenring (4) als mit dem Innenring (2) verschraubbares oder verschraubtes Stellmittel zum Einstellen des Anpressdrucks und/oder der Selbsthemmung des Gleitlagers ausgebildet ist, wobei das Stellmittel vorzugsweise mittels Gewindestiften (13) gesichert ist.

6. Drehverbindung nach einem der vorangehenden Ansprüche, **dadurch gekennzeichnet, dass** einer Gleitpaarung (5, 6) zum Erzeugen eines festgelegten Anpressdrucks wenigstens ein vorgespanntes Federelement zugeordnet ist.

7. Drehverbindung nach Anspruch 6, **dadurch gekennzeichnet, dass** das Federelement eine oder mehrere Tellerfedern oder Wellringfedern umfasst.

## Claims

1. Rotational connection with a self-locking bearing (1), in particular for mounting a ceiling stand, comprising at least one inner ring (2) and at least one outer ring (3), wherein the bearing (1) is designed as a sliding bearing and has an intermediate ring (4) arranged radially between the at least one inner ring (2) and the at least one outer ring (3), wherein each ring (2, 3, 4) has at least one annular sliding face that is inaccessible from the outside and wherein a first sliding pairing (5) is provided between the at least one inner ring (2) and the at least one outer ring (3) and a second sliding pairing (6) is provided between the intermediate ring (4) and the at least one outer ring (3), **characterized in that** one sliding pairing (5, 6) is designed as a sliding bearing disc pairing in which a first sliding bearing disc (9) is arranged on the at least one inner ring (2) and a second sliding bearing disc (10) is arranged on the at least one outer ring (3) and/or a first sliding bearing disc (11) is arranged on the intermediate ring (4) and a second sliding bearing disc (12) is arranged on the at least one outer ring (3), wherein a sliding face of one sliding pairing (5, 6) is coated with a sliding lacquer.

2. Rotational connection according to Claim 1, **characterized in that** the sliding face having the sliding lacquer has an anchor coating or an emergency running coating that is applied to the sliding lacquer.

3. Rotational connection according to Claim 2, **characterized in that** the anchor coating or emergency running coating consists of manganese phosphate or contains manganese phosphate.

4. Rotational connection according to one of the preceding claims, **characterized in that** that sliding face of the sliding pairing (5, 6) which has no sliding lacquer is uncoated.

5. Rotational connection according to one of the preceding claims, **characterized in that** the intermediate ring (4) is designed as an adjustment means, which is or can be screwed-connected to the inner ring (2), for setting the contact pressure and/or the self-locking action of the sliding bearing, wherein the adjustment means is preferably secured by means of threaded pins (13).

6. Rotational connection according to one of the preceding claims, **characterized in that** at least one pre-loaded spring element is assigned to a sliding pairing (5, 6) for the purpose of producing a fixed contact pressure.

7. Rotational connection according to Claim 6, **characterized in that** the spring element comprises one or more Belleville washers or wave springs.

## Revendications

1. Liaison pivotante comprenant un palier autobloquant (1), en particulier pour le support sur palier d'un support de plafond, comprenant au moins une bague intérieure (2) et au moins une bague extérieure (3), le palier (1) étant réalisé sous forme de palier lisse et présentant une bague intermédiaire (4) disposée radialement entre l'au moins une bague intérieure (2) et l'au moins une bague extérieure (3), chaque bague (2, 3, 4) présentant au moins une surface de glissement annulaire non accessible depuis l'extérieur et un premier appariement de surfaces de glissement (5) étant prévu entre l'au moins une bague intérieure (2) et l'au moins une bague extérieure (3) et un deuxième appariement de surfaces de glissement (6) étant prévu entre la bague intermédiaire (4) et l'au moins une bague extérieure (3),
**caractérisée en ce qu'**un appariement de surfaces de glissement (5, 6) est réalisé sous forme d'appariement de rondelles de palier lisse dans lequel une première rondelle de palier lisse (9) est disposée au niveau de l'au moins une bague intérieure (2) et une deuxième rondelle de palier lisse (10) est disposée au niveau de l'au moins une bague extérieure (3) et/ou une première rondelle de palier lisse (11) est disposée au niveau de la bague intermédiaire (4) et une deuxième rondelle de palier lisse (12) est disposée au niveau de l'au moins une bague extérieure (3), une surface de glissement d'un appariement de surfaces de glissement (5, 6) étant revêtue d'un vernis de glissement.

2. Liaison pivotante selon la revendication 1, **caractérisée en ce que** la surface de glissement présentant le vernis de glissement présente un revêtement d'ancrage ou de secours sur lequel est appliqué le vernis de glissement.

3. Liaison pivotante selon la revendication 2, **caractérisée en ce que** le revêtement d'ancrage ou de secours se compose de phosphate de manganèse ou présente du phosphate de manganèse.

4. Liaison pivotante selon l'une quelconque des revendications précédentes, **caractérisée en ce que** la surface de glissement de l'appariement de surfaces de glissement (5, 6) qui ne présente pas de vernis de glissement n'est pas revêtue.

5. Liaison pivotante selon l'une quelconque des revendications précédentes, **caractérisée en ce que** la bague intermédiaire (4) est réalisée sous forme de moyen de réglage vissé ou pouvant être vissé avec la bague intérieure (2) pour ajuster la pression de pressage et/ou l'autoblocage du palier lisse, le moyen de réglage étant de préférence fixé au moyen de goupilles filetées (13).

6. Liaison pivotante selon l'une quelconque des revendications précédentes, **caractérisée en ce qu'**au moins un élément de ressort précontraint est associé à un appariement de surfaces de glissement (5, 6) pour la génération d'une pression de pressage fixe.

7. Liaison pivotante selon la revendication 6, **caractérisée en ce que** l'élément de ressort comprend un ou plusieurs ressorts Belleville ou ressorts à bague ondulée.
